# EUROPEAN PATENT SPECIFICATION

(11) **EP 3 725 448 B1**
(45) Date of publication and mention of the grant of the patent: **13.08.2025**
(21) Application number: 20177475.9
(22) Date of filing: 25.10.2019
(51) Int. Cl.: B23K 9/04, B23K 9/173, B23K 9/26, B33Y 30/00, B29C 64/209

(54) **DUAL WIRE WELDING OR ADDITIVE MANUFACTURING CONTACT TIP AND DIFFUSER**
KONTAKTSPITZE ZUM DOPPELDRAHTSCHWEISSEN ODER ZUR GENERATIVEN FERTIGUNG UND DIFFUSOR
POINTE DE CONTACT DE SOUDAGE DE FIL DOUBLE OU DE FABRICATION ADDITIVE ET DIFFUSEUR

(30) Priority: 26.10.2018 US 201862750893 P; 05.02.2019 US 201916267476; 07.03.2019 US 201916295571
(43) Date of publication of application: 21.10.2020
(62) Divisional of application: 19205356.9
(73) Proprietor: Lincoln Global, Inc., Santa Fe Springs, CA 90670 (US)
(72) Inventor: STERGIOS, Alexander J., Independence, OH Ohio 44131 (US); PETERS, Steven R., Huntsburg, OH Ohio 44046 (US); CHANTRY, Bruce John, Solon, OH Ohio 44139 (US); WEEKS, Matthew A., Walloon, Queensland 4305 (AU)
(74) Representative: Grosse Schumacher Knauer von Hirschhausen

(56) References cited:
- DE-A1- 102015 122 135
- JP-A- 2008 246 495
- JP-A- H02 258 168
- US-A1- 2017 080 511
- CHEN SHUJUN ET AL: "Sustaining the inter-wire arc in twin-wire indirect arc welding", JOURNAL OF MANUFACTURING PROCESSES, SOCIETY OF MANUFACTURING ENGINEERS, DEARBORN, MI, US, vol. 21, 24 December 2015 (2015-12-24), pages 69 - 74, XP029406094, ISSN: 1526-6125, DOI: 10.1016/J.JMAPRO.2015.11.009

## Description

### Field of the Invention

The invention is related to a welding or additive manufacturing contact tip according to claim 1, 2 and 4. This application is a continuation-in-part of U.S. Patent Application No. 15/671,295 filed on August 8, 2017. Benefit of U.S. Provisional Patent Application Serial Number 62/750,893 filed on October 26, 2018, is hereby claimed.

Devices, systems, and methods consistent with the invention relate to material deposition with a dual wire configuration.

### TECHNICAL BACKGROUND

When welding, it is often desirable to increase the width of the weld bead or increase the length of the weld puddle during welding. There can be many different reasons for this desire, which are well known in the welding industry. For example, it may be desirable to elongate the weld puddle to keep the weld and filler metals molten for a longer period of time so as to reduce porosity. That is, if the weld puddle is molten for a longer period of time there is more time for harmful gases to escape the weld bead before the bead solidifies. Further, it may desirable to increase the width of a weld bead so as to cover wider weld gap or to increase a wire deposition rate. In both cases, it is common to use an increased electrode diameter. The increased diameter will result in both an elongated and widened weld puddle, even though it may be only desired to increase the width or the length of the weld puddle, but not both. However, this is not without its disadvantages. Specifically, because a larger electrode is employed more energy is needed in the welding arc to facilitate proper welding. This increase in energy causes an increase in heat input into the weld and will result in the use of more energy in the welding operation, because of the larger diameter of the electrode used. Further, it may create a weld bead profile or cross-section that is not ideal for certain mechanical applications. Rather than increasing the diameter of the electrode, it may be desirable to use at least two smaller electrodes simultaneously.

### DESCRIPTION

In order to improve welding, especially with respect to weld bed and/or weld puddle width and/or length features and their modifications, a welding or additive manufacturing contact tip according to claim 1 is described. Preferred embodiments are subject of the subclaims. The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later. The invention is set out in the appended claims.

In accordance with one aspect of the present disclosure, provided is a welding or additive manufacturing contact tip. The contact tip includes an electrically-conductive body extending from a proximal end of the body to a distal end of the body. The body forms a first bore terminating at a first exit orifice at a distal end face of the body, and a second bore terminating at a second exit orifice at the distal end face of the body. The first and second exit orifices are separated from each other by a distance configured to facilitate formation of a bridge droplet between a first wire electrode delivered through the first bore and a second wire electrode delivered through the second bore during a deposition operation.

In accordance with another aspect of the present disclosure, provided is a welding or additive manufacturing contact tip. The contact tip includes an electrically-conductive body extending from a proximal end of the body to a distal end of the body. The body forms a first bore through the body that extends from a first entrance orifice at the proximal end of the body to a first exit orifice at the distal end of the body, and a second bore through the body extending from a second entrance orifice at the proximal end of the body to a second exit orifice at the distal end of the body. The first and second exit orifices are separated from each other by a distance configured to facilitate formation of a bridge droplet between a first wire electrode delivered through the first bore and a second wire electrode delivered through the second bore during a deposition operation. The bridge droplet couples the first wire electrode to the second wire electrode prior to contacting a molten puddle created by the deposition operation.

In accordance with another aspect of the present disclosure, provided is a welding or additive manufacturing contact tip. The contact tip includes an electrically-conductive body extending from a proximal end of the body to a distal end of the body. The body forms a first channel terminating at a distal end face of the body, and a second channel terminating at the distal end face of the body. At the distal end face of the body, the first channel and the second channel are separated from each other by a distance configured to facilitate formation of a bridge droplet between a first wire electrode delivered through the first channel and a second wire electrode delivered through the second channel during a deposition operation. The bridge droplet couples the first wire electrode to the second wire electrode prior to contacting a molten puddle created by the deposition operation.

### BRIEF DESCRIPTION OF THE DRAWINGS

The above and/or other aspects of the invention will be more apparent by describing in detail exemplary embodiments of the invention with reference to the accompanying drawings, in which:
FIG. 1 illustrates a diagrammatical representation of an exemplary embodiment of a welding system of the present invention;
FIG. 2 illustrates a diagrammatical representation of an exemplary contact tip assembly in an embodiment of the present invention;
FIGs. 3A to 3C illustrate diagrammatical representations of a welding operation in an exemplary embodiment of the present invention;
FIGs. 4A to 4B illustrate diagrammatical representations current and magnetic field interactions in exemplary embodiments of the present invention;
FIG. 5A illustrates a diagrammatical representation of an exemplary weld bead with a single wire and FIG. 5B illustrates a diagrammatical representation of an exemplary weld bead with an embodiment of the invention;
FIG. 6 illustrates a diagrammatical representation of an exemplary weld process flow chart for an embodiment of the present invention;
FIG. 7 illustrates a diagrammatical representation of an alternative embodiment of a contact tip assembly for use with embodiments not part of the present invention;
FIG. 8 illustrates a diagrammatical representation of an exemplary weld current waveform for embodiments of the present invention;
FIG. 9 illustrates a diagrammatical representation of a further exemplary weld current waveform for embodiments of the present invention;
FIG. 10 illustrates a diagrammatical representation of an additional exemplary weld current waveform for embodiments of the present invention;
FIG. 11 shows a portion of a welding torch;
FIG. 12 is a perspective view of a contact tip and diffuser;
FIG. 13 is a perspective view of a contact tip;
FIG. 14 is a perspective view of a contact tip;
FIG. 15 is a perspective view of a diffuser;
FIG. 16 is a perspective view of a diffuser;
FIG. 17 is a perspective view of a contact tip and bias spring;
FIG. 18 shows a perspective view of a contact tip, bias spring and diffuser;
FIG. 19 shows a portion of a welding torch;
FIG. 20 is a perspective view of a contact tip and diffuser;
FIG. 21 is a perspective view of a contact tip;
FIG. 22 is a perspective view of a contact tip and diffuser;
FIG. 23 is a perspective view of a contact tip and diffuser; and
FIG. 24 is a perspective view of a diffuser.

### DETAILED DESCRIPTION OF EXEMPLARY EMBODIMENTS

Exemplary embodiments of the invention will now be described below by reference to the attached Figures. The described exemplary embodiments are intended to assist the understanding of the invention, and are not intended to limit the scope of the invention in any way. Like reference numerals refer to like elements throughout.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B.**"**

While embodiments of the present invention discussed herein are discussed in the context of GMAW type welding, other embodiments of the invention are not limited thereto. For example, embodiments can be utilized in SAW and FCAW type welding operations, as well as other similar types of welding operations. Further, while the electrodes described herein are solid electrodes, again, embodiments of the present invention are not limited to the use of solid electrodes as cored electrodes (either flux or metal cored) can also be used without departing from the scope of the present invention. Further, embodiments of the present invention can also be used in manual, semi-automatic and robotic welding operations. Because such systems are well known, they will not be described in detail herein.

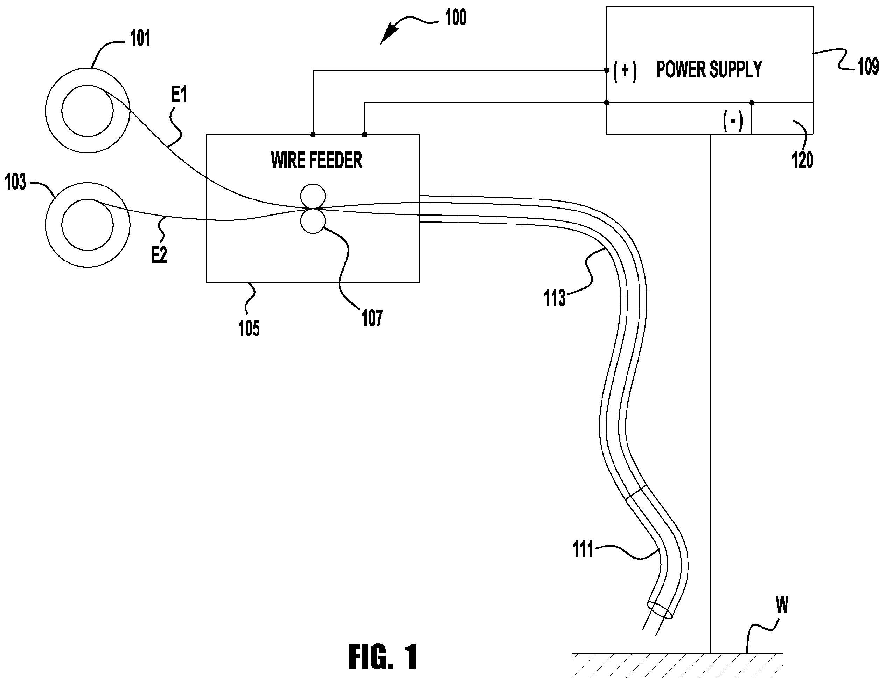

Turning now to the Figures, Figure 1 depicts an exemplary embodiment of a welding system 100 in accordance with an exemplary embodiment of the present invention. The welding system 100 contains a welding power source 109 which is coupled to both a welding torch 111 (having a contact tip assembly - not shown) and a wire feeder 105. The power source 109 can be any known type of welding power source capable of delivering the current and welding waveforms described herein, for example, pulse spray, STT and/or short arc type welding waveforms. Because the construction, design and operation of such power supplies are well known, they need not be described in detail herein. It is also noted that welding power can be supplied by more than one power supply at the same time - again the operation of such systems are known. The power source 109 can also include a controller 120 which is coupled to a user interface to allow a user to input control or welding parameters for the welding operation. The controller 120 can have a processor, CPU, memory etc. to be used to control the operation of the welding process as described herein. The torch 111, which can be constructed similar to known manual, semi-automatic or robotic welding torches can be coupled to any known or used welding gun and can be of a straight or gooseneck type as described above. The wire feeder 105 draws the electrodes E1 and E2 from electrode sources 101 and 103, respectively, which can be of any known type, such as reels, spools, containers or the like. The wire feeder 105 is of a known construction and employs feed rolls 107 to draw the electrodes E1 and E2 and push the electrodes to the torch 111. In an exemplary embodiment of the present invention, the feed rolls 107 and wire feeder 105 are configured for a single electrode operation. Embodiments of the present invention, using a dual wire configuration, can be utilized with a wire feeder 105 and rollers 107 only designed for a single wire feeding operation. For example, rollers 107 can be configured for a single 0.045 inch diameter electrode, but will suitable drive two electrodes of a 0.030 inch diameter without modification to the wire feeder 105 or the rollers 107. Alternatively, the wire feeder 105 can be designed to provide separate sets of rollers for feeding the electrodes E1/E2 respectively, or have rollers configured for feeding two or more electrodes simultaneously (e.g., via trapezoidal-shaped wire receiving grooves around the rollers that can accommodate two electrodes). In other embodiments, two separate wire feeders can also be used. As shown, the wire feeder(s) 105 is in communication with the power source 109 consistent with known configurations of welding operations.

Once driven by the rollers 107, the electrodes E1 and E2 are passed through a liner 113 to deliver the electrodes E1 and E2 to the torch 111. The liner 113 is appropriately sized to allow for the passage of the electrodes E1 and E2 to the torch 111. For example, for two 0.030 inch diameter electrodes, a standard 0.0625 inch diameter liner 113 (which is typically used for a single 0.0625 inch diameter electrode) can be used with no modification.

Although the examples referenced above discuss the use of two electrodes having a same diameter, the present invention is not limited in this regard as embodiments can use electrodes of a different diameter. That is, embodiments of the present invention can use an electrode of a first, larger, diameter and an electrode of a second, smaller, diameter. In such an embodiment, it is possible to more conveniently weld two work pieces of different thicknesses. For example, the larger electrode can be oriented to the larger work piece while the smaller electrode can be oriented to the smaller work piece. Further, embodiments of the present invention can be used for many different types of welding operations including, but not limited to, metal inert gas, submerged arc, and flux-cored welding. Further, embodiments of the present invention can be used for automatic, robotic and semi-automatic welding operations. Additionally, embodiments of the present invention can be utilized with different electrode types. For example, it is contemplated that a cored electrode can be coupled with a non-cored electrode. Further, electrodes of differing compositions can be used to achieve the desired weld properties and composition of the final weld bead. Thus, embodiments of the present invention can be utilized in a broad spectrum of welding operations.

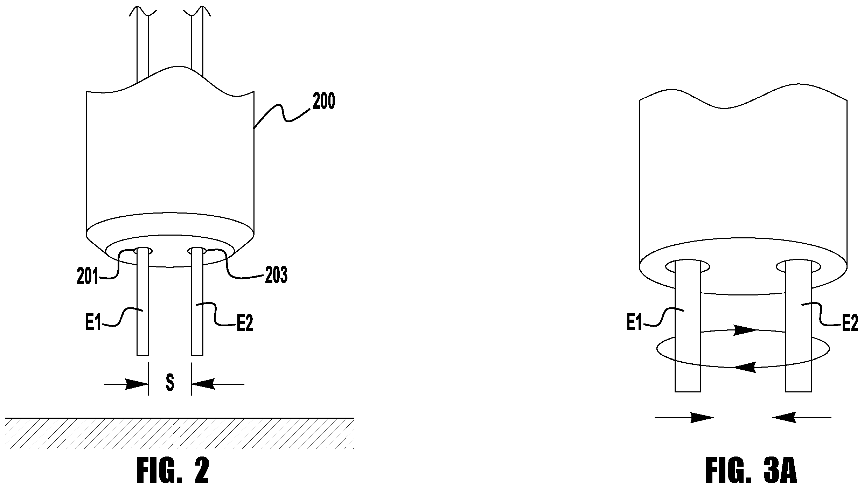

Figure 2 depicts an exemplary contact tip assembly 200 of the present invention. The contact tip assembly 200 can be made from known contact tip materials and can be used in any known type of welding gun. As shown in this exemplary embodiment, the contact tip assembly has two separate channels 201 and 203 which run the length of the contact tip assembly 200. During welding a first electrode E1 is passed through the first channel 201 and the second electrode E2 is passed through the second channel 203. The channels 201/203 are typically sized appropriately for the diameter of wire that is to be passed there through. For example, if the electrodes are to have the same diameter the channels will have the same diameters. However, if different diameters are to be used then the channels should be sized appropriately so as to properly transfer current to the electrodes. Additionally, in the embodiment shown, the channels 201/203 are configured such that the electrodes E1/E2 exit the distal end face of the contact tip 200 in a parallel relationship. However, in other exemplary embodiments the channels can be configured such that the electrodes E1/E2 exit the distal end face of the contact tip such that an angle in the range of +/- 15° exists between the centerlines of the respective electrodes. The angling can be determined based on the desired performance characteristics of the welding operation. It is further noted that in some exemplary embodiments the contact tip assembly can be a single integrated contact tip with a channels as shown, while in other embodiments the contact tip assembly can be comprised of two contact tip subassemblies located close to each other, where the current is directed to each of the contact tip subassemblies.

As shown in Figure 2, the respective electrodes E1/E2 are spaced by a distance S which is the distance between the closest edges of the electrodes. In exemplary embodiments of the present invention, this distance is in the range of 0.25 to 4 times the diameter of the larger of the two electrodes E1/E2, while in other exemplary embodiments the distance S is in the range of 2 to 3 times the largest diameter. For example, if each of the electrodes has a diameter of 1 mm, the distance S can be in the range of 2 to 3 mm. In other exemplary embodiments, the distance S is in the range of 0.25 to 2.25 times the diameter of one of the wire electrodes, such as the larger of the two electrodes. In manual or semi-automatic welding operations the distance S can be in the range of 0.25 to 2.25 times the largest electrode diameter, whereas in robotic welding operations the distance S can be in the same or another range, such as 2.5 to 3.5 times the largest electrode diameter. In exemplary embodiments, the distance S is in the range of 0.2 to 3.5mm.

The wire electrodes E1/E2 project from exit orifices on the end face of the contact tip 200. The diameter of the exit orifices is slightly larger than the diameter of the wire electrodes E1/E2. For example, for a 0.035 inch wire, the diameter of the exit orifice could be 0.043 inches (1.09 mm); for a 0.040 inch wire, the diameter of the exit orifice could be 0.046 inches (1.17 mm); for a 0.045 inch wire, the diameter of the exit orifice could be 0.052 inches (1.32 mm). The channels 201, 203 and exit orifices are spaced appropriately to facilitate the formation of a single bridge droplet between the wire electrodes E1/E2 during a deposition operation. For exit orifices sized for electrodes having a diameter 0.045 inches and smaller, the distance between the exit orifices (inner circumference to inner circumference, similar to distance S) can be less than 3 mm to facilitate the formation of a bridge droplet. However, spacing of 3 mm or greater between the exit orifices may be possible, depending on the wire size, magnetic forces, orientation (e.g., angle) of the channels 201, 203, etc. In certain embodiments, the distance between the exit orifices is within the range of 20% to 200% of the diameter of one or both of the exit orifices, which can also correspond to the distance S between the wire electrodes being in the range of 0.25 to 2.25 times the diameter of the electrodes.

As explained further below, the distance S should be selected to ensure that a single bridge droplet is formed between the electrodes, before the droplet is transferred, while preventing the electrodes from contacting each other, other than through the bridge droplet.

Figure 3A depicts an exemplary embodiment of the present invention, while showing in the interactions of the magnetic forces from the respective electrodes E1 and E2. As shown, due to the flow of current, a magnetic field is generated around the electrodes which tends to create a pinch force that draws the wires towards each other. This magnetic force tends to create a droplet bridge between the two electrodes, which will be discussed in more detail below.

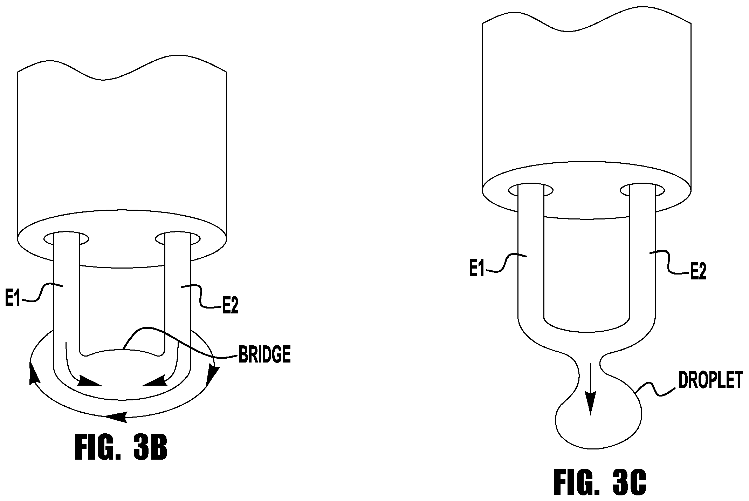

Figure 3B shows the droplet bridge that is created between the two electrodes. That is, as the current passing through each of the electrodes melts the ends of the electrodes the magnetic forces tend to draw the molten droplets towards each other until they connect with each other. The distance S is far enough such that the solid portions of the electrodes are not drawn to contact each other, but close enough that a droplet bridge is created before the molten droplet is transferred to the weld puddle created by the welding arc. The droplet is depicted in Figure 3C where the droplet bridge creates a single large droplet that is transferred to the puddle during welding. As shown, the magnetic pinch force acting on the droplet bridge acts to pinch off the droplet similar to the use of pinch force in a single electrode welding operation.

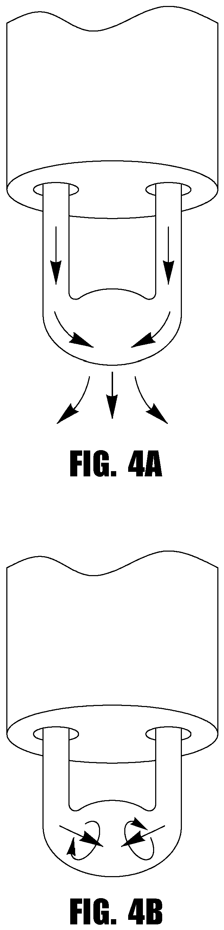

Further, Figure 4A depicts an exemplary representation of current flow in an embodiment of the present invention. As shown the welding current is divided so as to flow through each of the respective electrodes and passes to and through the bridge droplet as it is formed. The current then passes from the bridge droplet to the puddle and work piece. In exemplary embodiments where the electrodes are of the same diameter and type the current will be essentially divided evenly through the electrodes. In embodiments where the electrodes have different resistance values, for example due to different diameters and/or compositions/construction, the respective currents will be apportioned due to the relationship of V = I*R, as the welding current is applied to the contact tip similar to known methodologies and the contact tip provides the welding current to the respective electrodes via the contact between the electrodes and the channels of the contact tip. Figure 4B depicts the magnetic forces within the bridge puddle that aid in creating the bridge droplet. As shown, the magnetic forces tend to pull the respective molten portions of the electrodes towards each other until they contact with each other.

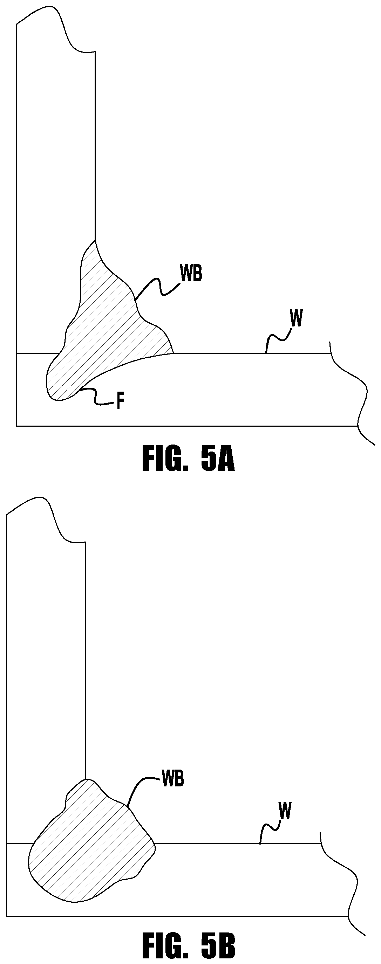

Figure 5A depicts an exemplary cross-section of a weld made with a single electrode welding operation. As shown, while the weld bead WB is of an appropriate width, the finger F of the weld bead WB, which penetrates into the work pieces W as shown, has a relatively narrow width. This can occur in single wire welding operations when higher deposit rates are used. That is, in such welding operations the finger F can become so narrow that it is not reliable to assume that the finger penetrated in the desired direction, and thus cannot be a reliable indicator of proper weld penetration. Further, as this narrow finger dives deeper this can lead to defects such as porosity trapped near the finger. Additionally, in such welding operations the useful sides of the weld bead are not as deeply penetrated as desired. Thus, in certain applications this mechanical bond is not as strong as desired. Additionally, in some welding applications, such as when welding horizontal fillet welds, the use of a single electrode made it difficult to achieve equal sized weld legs, at high deposition speeds, without the addition of too much heat to the welding operation. These issues are alleviated with embodiments of the present invention which can reduce the penetration of the finger and spread the finger making the side penetration of the weld wider. An example of this is shown in Figure 5B, which shows a weld bead of an embodiment of the present invention. As shown in this embodiment, a similar, or improved weld bead leg symmetry and/or length can be achieved, as well as a wider weld bead at the weld depth within the weld joint. This improved weld bead geometry is achieved while using less overall heat input into the weld. Therefore, embodiments of the present invention can provide improved mechanical weld performance with lower amounts of heat input, and at improved deposition rates.

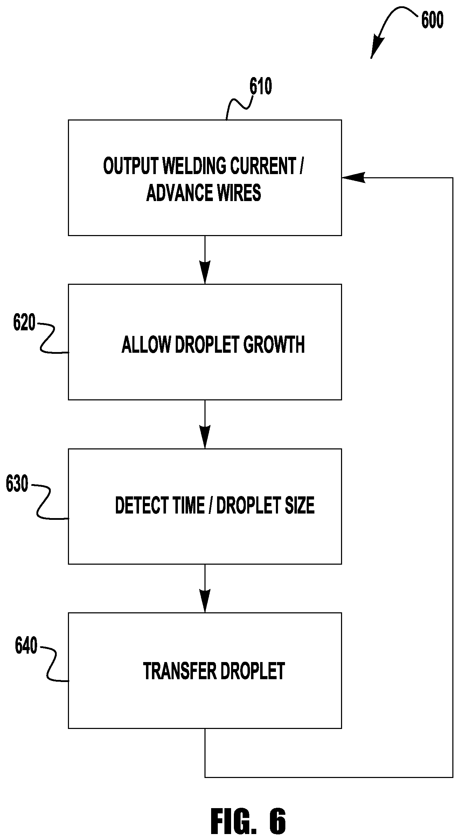

Figure 6 depicts a flow chart 600 of an exemplary welding operation of the present invention. This flow chart is intended to be exemplary and is not intended to be limiting. As shown, a welding current/output is provided by the welding power source 610 such that current is directed to the contact tip and electrodes consistent with known system constructions. Exemplary waveforms are discussed further below. During welding a bridge droplet is allowed to form 620 between the electrodes where the respective droplets from each electrode contact each other to create a bridge droplet. The bridge droplet is formed prior to contacting the weld puddle. During formation of the bridge droplet at least one of a duration or a droplet size is detected until such time as the droplet reaches a size to be transferred, and then the droplet is transferred to the puddle 640. The process is repeated during the welding operation. To control the welding process the power source controller/control system can use either one of a bridge droplet current duration and/or a bridge droplet size detection to determine if the bridge droplet is of a size to be transferred. For example, in one embodiment a predetermined bridge current duration is used for a given welding operation such that a bridge current is maintained for that duration, after which droplet transfer is then initiated. In a further exemplary embodiment, the controller of the power source/supply can monitor the welding current and/or voltage and utilize a predetermined threshold (for example a voltage threshold) for a given welding operation. For example, in such embodiments, as the detected arc voltage (detected via a known type of arc voltage detection circuit) detects that the arc voltage has reached a bridge droplet threshold level the power supply initiates a droplet separation portion of the welding waveform. This will be discussed further below in some exemplary embodiments of welding waveforms that can be used with embodiments of the present invention.

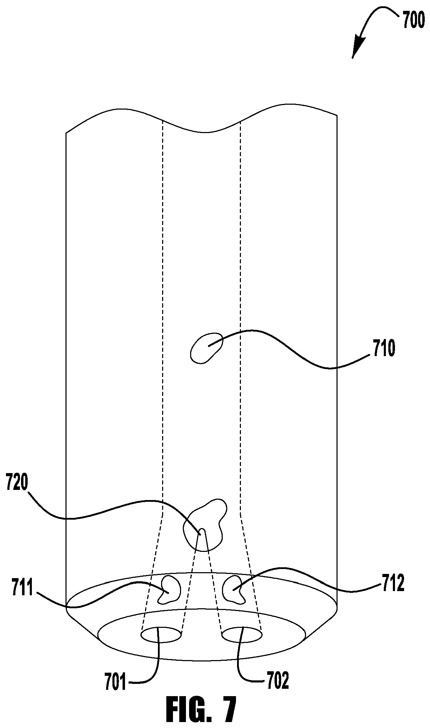

Figure 7 depicts an alternative exemplary embodiment of a contact tip 700 that can be used with embodiments of the present invention. As described previously, in some embodiments the electrodes can be directed to the torch via a single wire guide/liner. Of course, in other embodiments, separate wire guide/liners can be used. However, in those embodiments, where a single wire guide/liner is used the contact tip can be designed such that the electrodes are separated from each other within the contact tip. As shown in Figure 7, this exemplary contact tip 700 has a single entrance channel 710 with a single orifice at the upstream end of the contact tip 700. Each of the electrodes enter the contact tip via this orifice and pass along the channel 710 until they reach a separation portion 720 of the contact tip, where the separation portion directs one electrode into a first exit channel 711 and a second electrode into the second exit channel 712, so that the electrodes are directed to their discrete exit orifices 701 and 702, respectively. Of course, the channels 710, 711 and 712 should be sized appropriately for the size of electrodes to be used, and the separation portion 720 should be shaped so as to not scar or scratch the electrodes. As shown in Figure 7, the exit channels 711 and 712 are angled relative to each other, however, as shown in Figure 2, these channels can also be oriented parallel to each other.

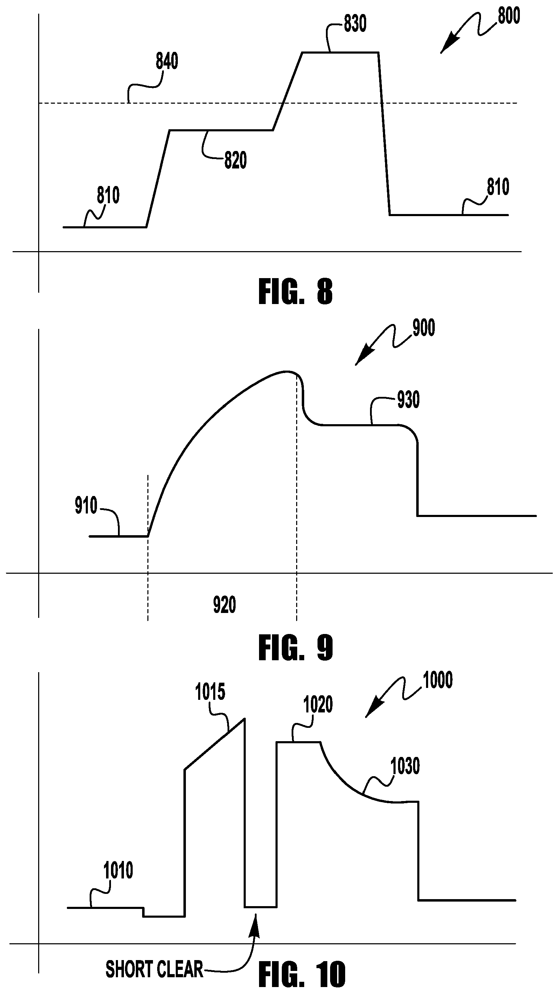

Turning now to Figures 8 through 10, various exemplary waveforms that can be used with exemplary embodiments of the present invention are depicted. In general, in exemplary embodiments of the present invention, the current is increased to create the bridge droplet and build it for transfer. In exemplary embodiments, at transfer the bridge droplet has an average diameter which is similar to the distance S between the electrodes, which can be larger than the diameter of either of the electrodes. When the droplet is formed it is transferred via a high peak current, after which the current drops to a lower (e.g. background) level to remove the arc pressure acting on the wires. The bridging current then builds the bridge droplet without exerting too much pinch force to pinch off the developing droplet. In exemplary embodiments, this bridging current is at a level in the range of 30 to 70% between the background current and the peak current. In other exemplary embodiments, the bridging current is in the range of 40 to 60% between the background current and the peak current. For example, if the background current is 100 amps and the peak current is 400 amps, the bridging current is in the range of 220 to 280 amps (i.e., 40 to 60% of the 300 amp difference). In some embodiments the bridging current can be maintained for a duration in the range of 1.5 to 8 ms, while in other exemplary embodiments the bridging current is maintained for a duration in the range of 2 to 6 ms. In exemplary embodiments the bridging current duration begins at the end of the background current state and includes the bridging current ramp up, where the ramp up can be in the range of 0.33 to 0.67 ms depending on the bridging current level and the ramp rate. With exemplary embodiments of the present invention, the pulse frequency of waveforms can be slowed down as compared to single wire processes to allow for droplet growth which can improve control and allow for higher deposition rates as compared to single wire operations.

Figure 8 depicts an exemplary current waveform 800 for a pulsed spray welding type operation. As shown, the waveform 800 has a background current level 810, which then transitions to a bridge current level 820, during which the bridge droplet is grown to a size to be transferred. The bridge current level is less than a spray transition current level 840 at which the droplet starts its transfer to the puddle. At the conclusion of the bridge current 820 the current is raised to beyond the spray transition current level 840 to a peak current level 830. The peak current level is then maintained for a peak duration to allow for the transfer of the droplet to be completed. After transfer the current is then lowered to the background level again, as the process is repeated. Thus, in these embodiments the transfer of the single droplet does not occur during the bridge current portion of the waveform. In such exemplary embodiments, the lower current level for the bridge current 820 allows a droplet to form without excessive pinching force to direct the droplet to the puddle. Because of the use of the bridge droplet, welding operations can be attained where the peak current 830 can be maintained for a longer duration at a higher level than using a single wire. For example, some embodiments can maintain the peak duration for at least 4 ms, and in the range of 4 to 7 ms, at a peak current level in the range of 550 to 700 amps, and a background current in the range of 150 to 400 amps. In such embodiments, a significantly improved deposition rate can be achieved. For example, some embodiments have achieved deposition rates in the range of 19 to 26lbs/hr, whereas similar single wire processes can only achieve a deposition rate in the range of 10 to 16 lbs/hr. For example, in one non-limiting embodiment a pair of twin wires having a diameter of 0.040", using a peak current of 700 amps, a background current of 180 amps and a droplet bridge current of 340 amps can be deposited at a rate of 19lb/hr at a frequency of 120 Hz. Such a deposition is at a frequency much less than conventional welding processes, and thus more stable.

Figure 9 depicts another exemplary waveform 900 that can be used in a short arc type welding operation. Again, the waveform 900 has a background portion 910 prior to a short response portion 920 which is structured to clear a short between the droplet and the puddle. During the shorting response 920 the current is raised to clear the short and as the short is cleared the current is dropped to a bridge current level 930 during which the bridge droplet is formed. Again, the bridge current level 930 is less than the peak current level of the shorting response 920. The bridge current level 930 is maintained for a bridge current duration that allows a bridge droplet to be formed and directed to the puddle. During transfer of the droplet current is then dropped to the background level, which allows the droplet to advance until a short occurs. When a short occurs the shorting response/bridge current waveform is repeated. It should be noted that in embodiments of the present invention it is the presence of the bridge droplet that makes the welding process more stable. That is, in traditional welding processes that use multiple wires there is no bridge droplet. In those processes when one wire shorts or makes contact with the puddle the arc voltage drops and the arc for the other electrode will go out. This does not occur with embodiments of the present invention, where the bridge droplet is common to each of the wires.

Figure 10 depicts a further exemplary waveform 1000, which is a STT (surface tension transfer) type waveform. Because such waveforms are known, they will not be described in detail herein. To further explain an STT type waveform, its structure, use and implementation, US. Publication No. 2013/0264323, filed on April 5, 2012, is incorporated herein in its entirety. Again, this waveform has a background level 1010, and a first peak level 1015 and a second peak level 1020, where the second peak level is reached after a short between the droplet and puddle is cleared. After the second peak current level 1020, the current is dropped to a bridge current level 1030 where the bridge droplet is formed, after which the current is dropped to the background level 1010 to allow the droplet to be advanced to the puddle, until it makes contact with the puddle. In other embodiments, an AC waveform can be used, for example an AC STT waveform, pulse waveform, etc. can be used.

As discussed above, the wire electrodes used in a multi-wire deposition operation (e.g., welding, additive manufacturing, hardfacing, etc.) can be spaced by a distance S that facilitates formation of a bridge droplet between the wire electrodes. The size of the bridge droplet is determined by the spacing between the wire electrodes and the spacing between the exit orifices in the contact tip. The size of the bridge droplet determines the width of the electric arc that exists during the deposition operation, and reducing the spacing between the exit orifices and wire electrodes narrows the arc width. Larger bridge droplets may be preferred for larger welds, and smaller bridge droplets preferred for smaller welds. Deposition rate is impacted by the arc width, and the deposition rate for small gauge wires can be increased by reducing the spacing between the exit orifices and wire electrodes (e.g., from approximately 2mm to 1mm).

The maximum spacing between the exit orifices and between the wire electrodes is reached when the magnetic forces developed by the current waveform (e.g., at the peak current level) still allow formation of the bridge droplet, and is exceeded when bridging is no longer possible. The minimum spacing is that which keeps the wires separated at the point of bridging. The magnetic forces tend to pull the wire electrodes together, and the wires are somewhat flexible. Thus, the minimum spacing between the exit orifices and between the wire electrodes will depend on the stiffness of the electrodes, which is impacted by parameters such as wire diameter, material of construction, etc.

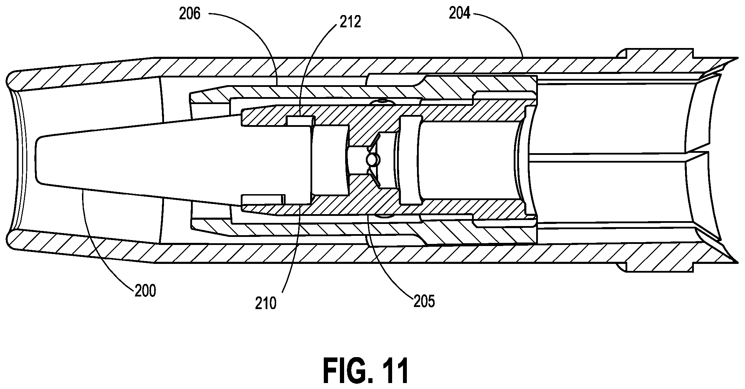

Figure 11 depicts an end portion of an exemplary welding torch in accordance with the present invention. Because the construction and operation of welding torches is generally known, the details of such construction and operation will not be discussed in detail herein. As shown, the torch includes a number of components and is used to deliver at least two wire electrodes and a shielding gas to a workpiece for a welding or additive manufacturing operation. The torch includes a diffuser 205 which aids in properly directing and distributing the shielding gas for a welding operation. Coupled to the downstream end of the diffuser 205 is a contact tip 200, which is used to pass the welding current into the at least two wire electrodes which are passing though the contact tip simultaneously during welding. The contact tip 200 is configured to facilitate the formation of a bridge droplet between the wire electrodes that are delivered through bores or channels in the contact tip. The bridge droplet couples the first wire electrode to the second wire electrode prior to contacting a molten puddle created by the deposition operation, as discussed above.

Threaded onto the outside of the diffuser 205 is an insulator 206. The insulator 206 electrically isolates a nozzle 204 from the electrically live components within the torch. The nozzle 204 directs the shielding gas from the diffuser 205 to the distal end of the torch and the workpiece during welding.

Conventional contact tips have threads on an upstream or proximal end of the contact tip that thread into the diffuser. The contact tip and diffuser are connected by screwing the contact tip into the diffuser. Such a fastening system works well for welding with single wires. The welding wire can be threaded through the contact tip and the contact tip can be rotated around the wire multiple times and screwed into the diffuser. However, when welding with multiple welding wires simultaneously passing through the contact tip, such a fastening system would result in an undesirable twisting of the welding wires. For example, if two welding wires are passed through the contact tip, subsequently threading the contact tip onto the diffuser by multiple turns requiring greater than 360° of rotation will result in the welding wires becoming twisted and unable to be fed through the contact tip.

The contact tip 200 in FIG. 11 is attached to the diffuser 205 by rotation of the contact tip through less than 360°, such as 270° (three-quarter turn), 180° (one-half turn), 90° (quarter turn), less than 90°, etc. The rotation of the contact tip 200 necessary to attach the contact tip to the diffuser 205 can be any angle as desired that is preferably less than 360° and results in the multiple wire electrodes passing through the contact tip not becoming unduly twisted during installation of the contact tip. If the welding wires are unduly twisted during installation of the contact tip, wire feeding problems will result and "bird nesting" of the welding wires can occur.

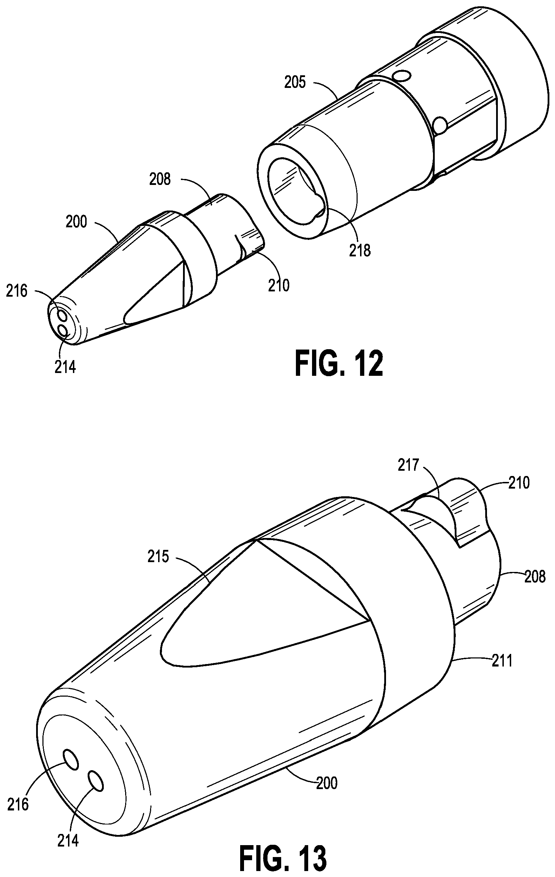

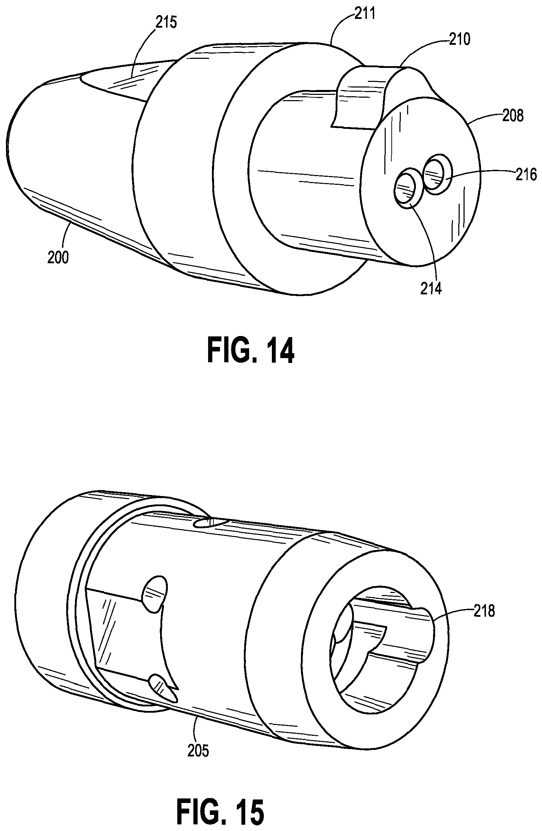

With reference to Figs. 11-16, the contact tip 200 is attached to the diffuser 205 by a quarter turn, clockwise rotation of the contact tip within the diffuser. The contact tip 200 has a forward or downstream distal portion that has a tapered shape and includes flats 215 to accommodate gripping by a tool, such as pliers. The contact tip 200 has a rearward or upstream proximal portion 208 that is generally cylindrical, but includes a radially-projecting tab 210 that engages a slot 212 in an interior wall of the diffuser 205, to securely connect the contact tip to the diffuser. The rearward portion 208 of the contact tip 200 is located within the diffuser 205 when the contact tip is installed onto the diffuser, and acts as a mounting shank for the contact tip. It can be seen that the diameter of the rearward portion 208 of the contact tip is smaller than the adjacent downstream portion, which results in a shoulder 211 projecting radially from the cylindrical rearward portion 208 of the contact tip. The shoulder 211 seats against the terminal end face of the diffuser 205 when the contact tip 200 is installed onto the diffuser.

The contact tip 200 can be made from known contact tip materials and can be used in any known type of welding gun. The contact tip can comprise an electrically-conductive body, such as copper, extending from its rearward, proximal end to its forward, distal end. As shown in this exemplary embodiment, the contact tip 200 has two separate wire channels or bores 214 and 216 which run the length of the contact tip. The channels 214/216 can extend between wire entrance orifices on the proximal end face of the mounting shank 208, and wire exit orifices on the distal end face of the contact tip. During welding, a first wire electrode is delivered through the first channel 214 and a second wire electrode is delivered through the second channel 216. The channels 214/216 are typically sized appropriately for the diameter of wire that is to be fed through the channel. For example, if the electrodes are to have the same diameter, then the channels will have the same diameters. However, if different wire sizes are to be used together, then the channels should be sized appropriately so as to properly transfer current to the differently-sized electrodes. Additionally, in the embodiment shown, the channels 214/216 are configured such that the electrodes exit the distal end face of the contact tip 200 in a parallel relationship. However, in other exemplary embodiments the channels can be configured so that the electrodes exit the distal end face of the contact tip such that an angle in the range of +/- 15° exists between the centerlines of the respective electrodes. The angling can be determined based on the desired performance characteristics of the welding operation. The example contact tips discussed herein are shown having two electrode bores. However, it is to be appreciated that the contact tips could have bores for more than two electrodes, such as three or more bores.

The slot 212 in the interior wall of the diffuser 205 includes an axial portion 218 and a helical portion 220. The axial portion 218 of the slot 212 extends to the downstream terminal end face of the diffuser 205, against which the shoulder 211 of the contact tip 200 seats. After the welding electrodes are fed through the contact tip 200, the radially-projecting tab 210 on the mounting shank 208 is inserted into the axial portion 218 of the 212 slot and the contact tip is pushed into the diffuser 205. When the tab 210 reaches the helical portion 220 of the slot, the contact tip 200 is rotated to move the tab to the end of the helical portion. The helical portion 220 has a slight upstream pitch that draws the contact tip 200 inward as the contact tip is rotated, so that the shoulder 211 of the contact tip seats against the downstream terminal end face of the diffuser 205. The tab 210 on the mounting shank 208 can have a tapered edge 217 that matches the pitch of the slot 212 in the diffuser 205, to help ensure a tight connection between the two components. In the example embodiment shown, the helical portion 220 of the slot 212 allows for a quarter turn of the contact tip 200 to secure the contact tip to the diffuser 205. However, it is to be appreciated that other rotational angles are possible (e.g., more or less than a quarter turn or 90°). For example, the helical portion 220 of the slot can extend less than 360° around the inner circumference of the interior chamber of the diffuser 205.

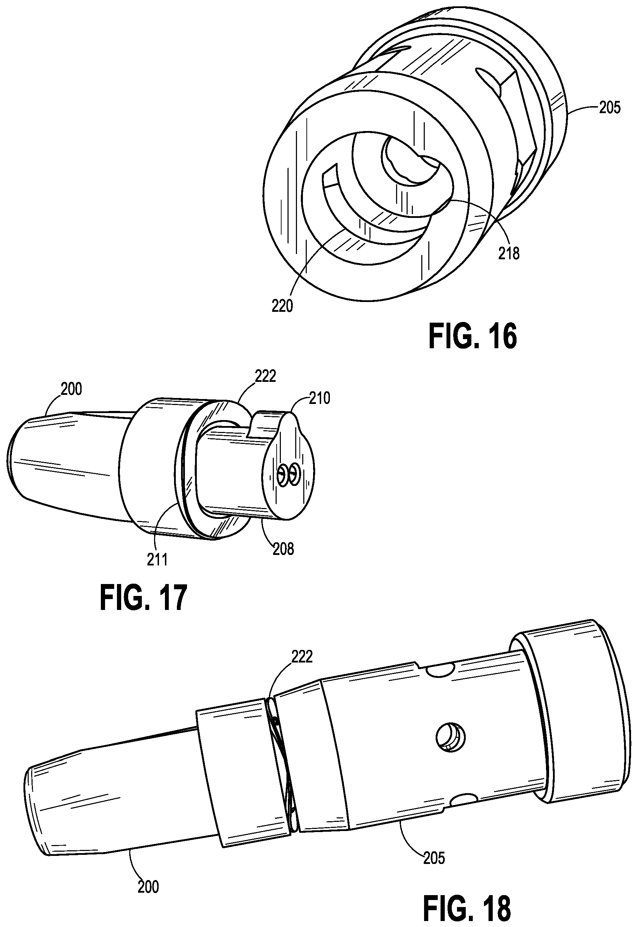

Figures 17 and 18 show an example embodiment of a contact tip 200 that includes a biasing mechanism to provide an axial force between the contact tip and the diffuser 205. The illustrated biasing mechanism is a bias spring 222, such as a wave washer. The bias spring 222 is compressed when the contact tip 200 is mounted to the diffuser 205, to maintain an axial force between the contact tip and diffuser. The axial force helps to seat the radially-projecting tab 210 on the mounting shank 208 in the slot 212 in the diffuser 205. In particular, the axial force can push the tapered surface of the tab 210 against the sidewall of the slot in the diffuser 205, to help secure the contact tip in place and resist loosening (e.g., due to thermal cycling, mechanical impacts, etc.) The mounting shank 208 extends from the shoulder portion 211 of the contact tip 200, and the bias spring 222 can be arranged annularly around the mounting shank, between the radially-projecting tab and the shoulder portion. The bias spring 222 can be captured on the mounting shank 208, such that it cannot be removed without damaging the bias spring or contact tip. Various types of biasing mechanisms could be used to maintain an axial force between the contact tip 200 and diffuser 205, such as lock washers or coil springs for example.

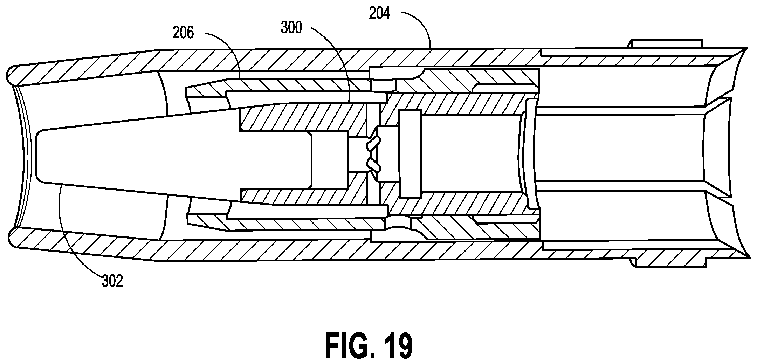

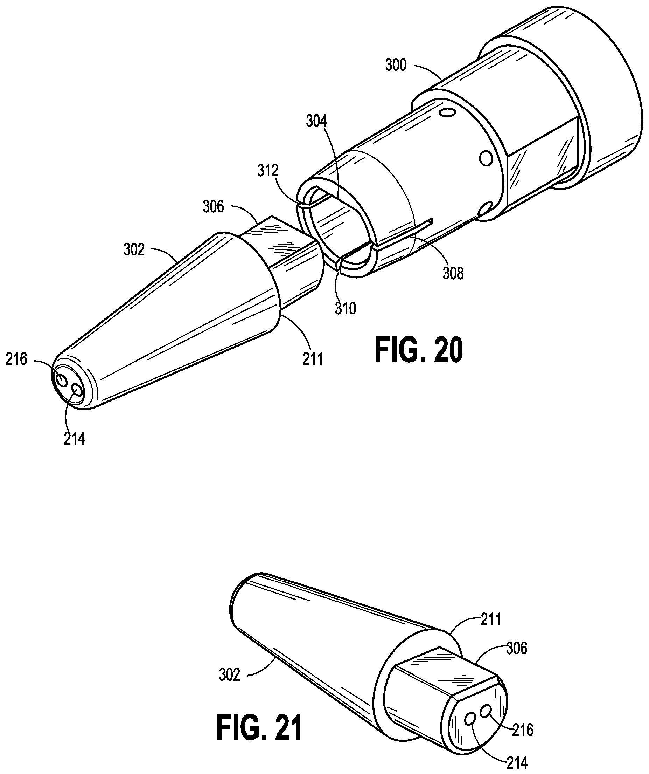

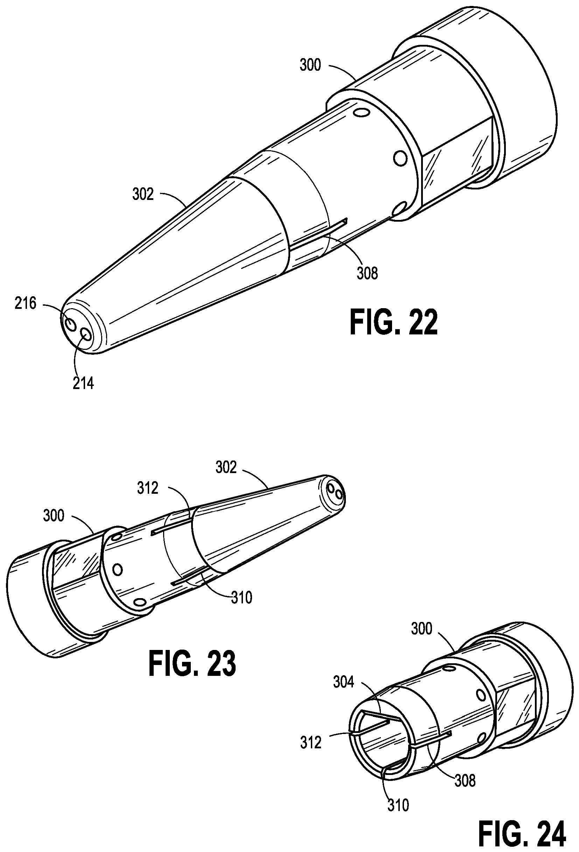

FIGS. 19-24 illustrate a further embodiment of a contact tip 302 and diffuser 300 for multiwire welding or additive manufacturing. The contact tip 302 requires no rotation when installed onto the diffuser 300, as will be described further below. The nozzle 204 and insulator portion 206 of the welding torch are substantially similar to the embodiment of Fig. 7. Also, the contact tip 302 includes wire channels 214/216 and a shoulder 211 as discussed above.

The contact tip 302 and diffuser 300 are keyed so that there is only one possible installed orientation between the contact tip and diffuser. The interior surface 304 of the diffuser and the rearward portion 306 or mounting shank of the contact tip are shown as having corresponding flats that key the diffuser and contact tip. However, other keying mechanisms could be used, such as a slot and projection keying mechanism for example.

After the welding electrodes are passed through the contact tip 302, the contact tip is inserted axially into the diffuser 300 without twisting or rotating the contact tip. The diffuser 300 is a collet style and clamps tightly against the rearward portion 306 of the contact tip, holding it in place by friction. The diffuser 300 can include a number slots 308, 310, 312 that allow the downstream end of the diffuser to expand slightly as the contact tip 302 is inserted into the diffuser. The expansion of the downstream end of the diffuser 300 results in a clamping force applied radially onto the rearward portion 306 of the contact tip. If desired, an additional clamping mechanism can be used to further secure the contact tip 302 within the diffuser 300. For example, a set screw could fasten the contact tip to the diffuser, or a clamp could further compress the downstream end of the diffuser around the rearward portion of the contact tip. Such a clamp could be threaded onto the diffuser such that the clamping force applied to the downstream end of the diffuser is provided by the axial movement of the clamp as it is threaded onto the diffuser.

The use of embodiments described herein can provide significant improvements in stability, weld structure and performance over known welding operations. However, in addition to welding operations, embodiments can be used in additive manufacturing operations. In fact the system 100 described above can be used in additive manufacturing operations as in welding operations. In exemplary embodiments, improved deposition rates can be achieved in additive manufacturing operations. For example, when using an STT type waveform in a single wire additive process, using an 0.045" wire can provide a deposition rate of about 5 lb/hr before becoming unstable. However, when using embodiments of the present invention and two 0.040" wires a deposition rate of 7lbs/hr can be achieved in a stable transfer. Because additive manufacturing processes and systems are known, the details of which need not be described herein. In such processes a bridging current, such as that descried above, can be used in the additive manufacturing current waveform.

It is noted that exemplary embodiments are not limited to the usage of the waveforms discussed above and described herein, as other welding type waveforms can be used with embodiments of the present invention. For example, other embodiments can use variable polarity pulsed spray welding waveforms, AC waveforms, etc. without departing from the scope of the present invention. For example, in variable polarity embodiments the bridge portion of the welding waveform can be done in a negative polarity such that the bridge droplet is created while reducing the overall heat input into the weld puddle. For example, when using AC type waveforms, the waveforms can have a frequency of 60 to 200 Hz of alternating negative and positive pulses to melt the two wires and form the bridge droplet between them. In further embodiments the frequency can be in the range of 80 to 120 Hz.

As explained previously, embodiments of the present invention can be used with different types and combinations of consumables including flux cored consumables. In fact, embodiments of the present invention can provide a more stable welding operation when using flux cored electrodes. Specifically, the use of a bridging droplet can aid in stabilizing flux core droplets that can tend to be unstable in a single wire welding operation. Further, embodiments of the present invention allow for increased weld and arc stability at higher deposition rates. For example, in single wire welding operations, at high current and high deposition rates the transfer type for the droplets can change from streaming spray to a rotational spray, which appreciably reduces the stability of the welding operation. However, with exemplary embodiments of the present invention the bridge droplet stabilizes the droplets which significantly improves arc and weld stability at high deposition rates, such as those above 201b/hr.

Additionally, as indicated above the consumables can be of different types and/or compositions, which can optimize a given welding operation. That is, the use of two different, but compatible, consumables can be combined to create a desired weld joint. For example, compatible consumables include hardfacing wires, stainless wires, nickel alloys and steel wires of different composition can be combined. As one specific example a mild steel wire can be combined with an overalloyed wire to make a 309 stainless steel composition. This can be advantageous when a single consumable of the type desired does not have desirable weld properties. For example, some consumables for specialized welding provide the desired weld chemistry but are extremely difficult to use and have difficulty providing a satisfactory weld. However, embodiments of the present invention allow for the use of two consumables that are easier to weld with to be combined to create the desired weld chemistry. Embodiments of the present invention can be used to create an alloy/deposit chemistry that is not otherwise commercially available, or otherwise very expensive to manufacture. Thus, two different consumables can be used to obviate the need for an expensive or unavailable consumable. Further, embodiments can be used to create a diluted alloy. For example, a first welding wire could be a common inexpensive alloy and a second welding wire could be a specialty wire. The desired deposit would be the average of the two wires, mixed well in the formation of the bridged droplet, at the lower average cost of the two wires, over an expensive specialty wire. Further, in some applications, the desired deposit could be unavailable due to the lack of appropriate consumable chemistry, but could be reached by mixing two standard alloy wires, mixed within the bridged droplet and deposited as a single droplet. Further, in some applications, such as the application of wear resistance metals, the desired deposit may be combination of tungsten carbide particles from one wire and chrome carbide particles from another. Still in another application, a larger wire housing larger particles within is mixed with a smaller wire containing fewer particles or smaller particles, to deposit a mixture of the two wires. Here the expected contribution from each of the wires is proportional to the size of wire given the wire feed speeds are same. In yet another example, the wire feed speeds of the wires are different to allow the alloy produced to change based on the desired deposit but the mixing of the wires is still produced by the bridged droplet created between the wires.

While the invention has been particularly shown and described with reference to exemplary embodiments thereof, the invention is not limited to these embodiments. It will be understood by those of ordinary skill in the art that various changes in form and details may be made therein without departing from the scope of the invention as defined by the following claims.

**REFERENCE NUMERALS**

| | | | |
|---|---|---|---|
| 100 | welding system | 701 | exit orifice |
| 101 | electrode source | 702 | second exit orifce |
| 103 | electrode source | 710 | channel |
| 105 | wire feeder | 711 | exit channel |
| 107 | feed roller | 712 | second exit channel |
| 109 | power source | 720 | separation portion |
| 111 | welding torch | 800 | waveform |
| 113 | diameter liner | 810 | current level |
| 120 | controller | 820 | bridge current |
| 200 | tip assembly/contact tip | 830 | peak current level |
| 201 | first channel | 840 | current level |
| 202 | second channel | 900 | waveform |
| 203 | third channel | 910 | background portion |
| 204 | nozzle | 920 | shorting response |
| 205 | diffuser | 930 | current level |
| 206 | insulator | 1000 | waveform |
| 208 | portion/mounting shank | 1010 | background level |
| 210 | tab | 1015 | first peak level |
| 214 | channel | 1020 | second peak level |
| 215 | flat | 1030 | current level |
| 216 | channel | | |
| 217 | edge | E1 | electrode |
| 218 | portion | E2 | electrode |
| 300 | diffuser | S | distance |
| 302 | contact tip | W | work piece |
| 306 | portion | WB | weld bead |
| 308 | slot | F | finger |
| 310 | slot | | |
| 312 | slot | | |
| 600 | flow chart | | |
| 610 | step | | |
| 620 | step | | |
| 630 | step | | |
| 640 | step | | |
| 700 | contact tip | | |

## Claims

1. An additive manufacturing contact tip (200), comprising:
an electrically-conductive body extending from a proximal end of the body to a distal end of the body, the body forming:
a first channel (214, 216) terminating at a distal end face of the body; and
a second channel (214, 216) terminating at the distal end face of the body; wherein, at the distal end face of the body, the first channel (214, 216) and the second channel (214, 216) are separated from each other by a distance, wherein said distance provides a spacing (S) between the first wire electrode (E1, E2) and the second wire electrode (E1, E2) that is within a range of 0.25 to 2.25 times a diameter of the first and second wire electrodes (E1, E2), as measured between closest edges of the first and second wire electrodes (E1, E2), and being configured to facilitate formation of a bridge droplet between a first wire electrode (E1, E2) delivered through the first channel (214, 216) and a second wire electrode (E1, E2) delivered through the second channel (214, 216) during a deposition operation, wherein the current is passing through each of the electrodes (E1, E2), and wherein the bridge droplet couples the first wire electrode (E1, E2) to the second wire electrode (E1, E2) prior to contacting a molten puddle created by the deposition operation, wherein the body includes a mounting shank (208), and one or more entrance orifices, preferably the first entrance orifice and/or the second entrance orifice are located on the mounting shank (208), and the mounting shank (208) includes a radially-projecting tab (210), further comprising a bias spring located between the radially-projecting tab (210) and the distal end face of the body, or located between the radially-projecting tab (210) and the distal end of the body, and wherein the mounting shank (208) extends from a shoulder portion of the contact tip (200, 700), and the bias spring is arranged annularly around the mounting shank (208) between the shoulder portion and the radially-projecting tab (210).

2. The additive manufacturing contact tip (200) of claim 1, wherein the first channel (214, 216) and/or the first exit orifice has a diameter, especially at the distal end face of the body, and said distance is within a range of 20% to 200% of said diameter.

3. The additive manufacturing contact tip (200) of claim 1 or 2, wherein said distance is less than 3 mm.

4. The additive manufacturing contact tip (200) of any of the claims 1 to 3, wherein
the radially-projecting tab (210) has a tapered edge, and the bias spring is a wave washer.

## Patentansprüche

1. Kontaktspitze (200) zur additiven Fertigung, umfassend:
einen elektrisch leitfähigen Körper, der sich von einem proximalen Ende des Körpers zu einem distalen Ende des Körpers erstreckt, wobei in dem Körper gebildet ist:
ein erster Kanal (214, 216), der an einer distalen Endfläche des Körpers endet; und
ein zweiter Kanal (214, 216), der an der distalen Endfläche des Körpers endet;
wobei an der distalen Endfläche des Körpers der erste Kanal (214, 216) und der zweite Kanal (214, 216) um eine Distanz voneinander getrennt sind, wobei die Distanz einen Abstand (S) zwischen der ersten Drahtelektrode (E1, E2) und der zweiten Drahtelektrode (E1, E2) bereitstellt, der innerhalb eines Bereichs des 0,25- bis 2,25-fachen eines Durchmessers der ersten und der zweiten Drahtelektrode (E1, E2) - zwischen den nächstgelegenen Rändern der ersten und der zweiten Drahtelektrode (E1, E2) gemessen - liegt und dazu eingerichtet ist, die Bildung eines Brückentropfens zwischen einer ersten Drahtelektrode (E1, E2), die durch den ersten Kanal (214, 216) zugeführt wird, und einer zweiten Drahtelektrode (E1, E2), die durch den zweiten Kanal (214, 216) zugeführt wird, während eines Abschmelzvorgangs zu unterstützen, wobei der Strom durch jede der Elektroden (E1, E2) fließt, und wobei der Brückentropfen die erste Drahtelektrode (E1, E2) mit der zweiten Drahtelektrode (E1, E2) koppelt, bevor er mit einer durch den Abschmelzvorgang erzeugten Schmelzpfütze in Kontakt kommt, wobei der Körper einen Montageschaft (208) und eine oder mehrere Eintrittsöffnungen aufweist, wobei sich bevorzugt die erste Eintrittsöffnung und/oder die zweite Eintrittsöffnung an dem Montageschaft (208) befinden, und der Montageschaft (208) eine radial vorstehende Nase (210) aufweist, des Weiteren umfassend eine Vorspannfeder, die sich zwischen der radial vorstehenden Nase (210) und der distalen Endfläche des Körpers befindet oder sich zwischen der radial vorstehenden Nase (210) und dem distalen Ende des Körpers befindet, und wobei sich der Montageschaft (208) von einem Schulterabschnitt der Kontaktspitze (200, 700) erstreckt und die Vorspannfeder ringförmig um den Montageschaft (208) zwischen dem Schulterabschnitt und der radial vorstehenden Nase (210) angeordnet ist.

2. Kontaktspitze (200) zur additiven Fertigung nach Anspruch 1, wobei der erste Kanal (214, 216) und/oder die erste Austrittsöffnung einen Durchmesser, insbesondere an der distalen Endfläche des Körpers, haben und die Distanz innerhalb eines Bereichs von 20 % bis 200 % des Durchmessers liegt.

3. Kontaktspitze (200) zur additiven Fertigung nach Anspruch 1 oder 2, wobei die Distanz weniger als 3 mm beträgt.

4. Kontaktspitze (200) zur additiven Fertigung nach einem der Ansprüche 1 bis 3, wobei die radial vorstehende Nase (210) einen konischen Rand aufweist und die Vorspannfeder eine Wellenscheibe ist.

## Revendications

1. Pointe de contact de fabrication additive (200), comprenant :
un corps électriquement conducteur s'étendant depuis une extrémité proximale du corps jusqu'à une extrémité distale du corps, le corps formant :
un premier canal (214, 216) se terminant au niveau d'une face d'extrémité distale du corps ; et
un deuxième canal (214, 216) se terminant au niveau de la face d'extrémité distale du corps ;
dans laquelle, au niveau de la face d'extrémité distale du corps, le premier canal (214, 216) et le deuxième canal (214, 216) sont séparés l'un de l'autre d'une distance, dans laquelle ladite distance fournit un espacement (S) entre le premier fil-électrode (E1, E2) et le deuxième fil-électrode (E1, E2) qui est dans une plage de 0,25 à 2,25 fois un diamètre des premier et deuxième fils-électrodes (E1, E2), tel que mesuré entre des bords les plus proches des premier et deuxième fils-électrodes (E1, E2), et étant configuré pour faciliter une formation d'une gouttelette de pont entre un premier fil-électrode (E1, E2) fourni à travers le premier canal (214, 216) et un deuxième fil-électrode (E1, E2) fourni à travers le deuxième canal (214, 216) au cours d'une opération de dépôt, dans laquelle le courant passe à travers chacun des fils-électrodes (E1, E2), et dans laquelle la gouttelette de pont couple le premier fil-électrode (E1, E2) au deuxième fil-électrode (E1, E2) avant d'entrer en contact avec un bain de fusion créé par l'opération de dépôt, dans laquelle le corps inclut une tige de montage (208) et un ou plusieurs orifices d'entrée, de préférence le premier orifice d'entrée et/ou le deuxième orifice d'entrée sont situés sur la tige de montage (208), et la tige de montage (208) inclut une languette saillante radialement (210), comprenant en outre un ressort de sollicitation situé entre la languette saillante radialement (210) et la face d'extrémité distale du corps, ou situé entre la languette saillante radialement (210) et l'extrémité distale du corps, et dans laquelle la tige de montage (208) s'étend depuis une partie d'épaulement de la pointe de contact (200, 700), et le ressort de sollicitation est agencé de manière annulaire autour de la tige de montage (208) entre la partie d'épaulement et la languette saillante radialement (210).

2. Pointe de contact de fabrication additive (200) selon la revendication 1, dans laquelle le premier canal (214, 216) et/ou le premier orifice de sortie présentent un diamètre, particulièrement au niveau de la face d'extrémité distale du corps, et ladite distance est dans une plage de 20 % à 200 % du diamètre.

3. Pointe de contact de fabrication additive (200) selon la revendication 1 ou 2, dans laquelle ladite distance est inférieure à 3 mm**.**

4. Pointe de contact de fabrication additive (200) selon l'une quelconque des revendications 1 à 3, dans laquelle la languette saillante radialement (210) présente un bord conique, et le ressort de sollicitation est une rondelle ondulée.
